# EUROPEAN PATENT SPECIFICATION

(11) **EP 3 185 125 B1**
(45) Date of publication and mention of the grant of the patent: **03.04.2019**
(21) Application number: 15833967.1
(22) Date of filing: 08.04.2015
(51) Int. Cl.: G06F 11/14, H04L 29/08

(54) **DATA BACKUP METHOD, SYSTEM, NODE AND COMPUTER STORAGE MEDIA**
VERFAHREN ZUR DATENSICHERUNG, SYSTEM, KNOTEN UND COMPUTERSPEICHERMEDIUM
PROCÉDÉ DE SAUVEGARDE DE DONNÉES, SYSTÈME, NOEUD ET SUPPORT DE STOCKAGE INFORMATIQUE

(30) Priority: 22.08.2014 CN 201410419266
(43) Date of publication of application: 28.06.2017
(73) Proprietor: ZTE Corporation, Shenzhen, Guangdong 518057 (CN)
(72) Inventor: GUO, Bin, Shenzhen Guangdong 518057 (CN); HAN, Yinjun, Shenzhen Guangdong 518057 (CN); GAO, Hong, Shenzhen Guangdong 518057 (CN); HUANG, Zhenjiang, Shenzhen Guangdong 518057 (CN); CHENG, Ning, Shenzhen Guangdong 518057 (CN); TU, Yaofeng, Shenzhen Guangdong 518057 (CN)
(74) Representative: Brevalex
(86) International application number: PCT/CN2015/076055
(87) International publication number: WO 2016/026306

(56) References cited:
- EP-A1- 2 687 987
- CN-A- 101 042 662
- CN-A- 101 042 662
- CN-A- 101 252 603
- CN-A- 101 252 603
- CN-A- 103 186 554
- US-A1- 2013 339 298
- US-A1- 2014 122 429

## Description

### TECHNICAL FIELD

The disclosure relates to a data storage technology, and in particular to a data backup method, system, node, and a computer storage medium.

### BACKGROUND

A distributed storage system is a centreless distributed cluster formed by connecting a plurality of server nodes, and the server nodes in the cluster receive operations such as writing, reading, updating, deleting, and so on, and are responsible for data storage. In the distributed storage system, a complete dataset is managed by being divided into a plurality of data subsets according to a certain partition rule, and at least one copy will be stored for the purpose of reliability requirements. All copies of each data subset will be evenly stored on a plurality of storage nodes according to a certain distribution rule, and data synchronization is performed among a plurality of copies of the same data subset in a master-slave manner.

In the distributed storage system, data backup is a key problem too difficult to solve, and it is more difficult to perform regular automatic data backup according to operation and maintenance requirements. Although high reliability and high disaster tolerance are advantages of the distributed storage system, some extreme conditions cannot be well handled. Therefore, for some important data in a production environment, there is still a need to regularly back up data for the purpose of security.

In the conventional art, data backup of the distributed system usually adopts two modes.

In a first solution, a client obtains data of a server side in a query or traversal manner and stores the data at the client. The defects of the solution are that data backup cannot be performed concurrently and is unlikely to be completed within limited time in case of a large data scale.

In a second solution, data on each node is exported respectively and is stored in a centralized manner. The defects of the technology are that: firstly, due to no control of a centralized backup mechanism, it is difficult to combine a plurality of repeated copy data after copies are exported on a plurality of storage nodes respectively, thereby causing waste of storage resources; and secondly, due to no control of the centralized backup mechanism, it is necessary to back up all data subsets during each backup operation, thereby causing over-long backup time.

CN 101042662A discloses a system and method for managing data backup in a distributed application environment.

CN 101252603A discloses a cluster distributed type lock management method based on storage area network SAN.

US 2013/339298A discloses a collaborative backup in a networked storage system.

EP 2687987A discloses a method, system and serving node for data backup and recovery.

US 2014/122429A discloses a data processing method and apparatus for distributed systems.

### SUMMARY

In order to solve the existing technical problems, the invention, which is defined in detail in the appended independent claims 1, 10 and 14, provides a data backup method and system, a node, and a computer storage medium, capable of implementing centralized control of a backup mechanism in a distributed storage system and shortening data backup time.

To this end, the technical solution in the embodiment of the disclosure is implemented as follows.

The embodiment of the disclosure provides a data backup method, which may include the following steps. After a cooperative service node is determined to be a master cooperative service node, the master cooperative service node acquires a backup rule. When a backup trigger condition is satisfied, the master cooperative service node initiates a backup operation according to the backup rule. And the step of a cooperative service node being determined to be a master cooperative service node includes that: all cooperative service nodes initiate a contention control flow to the distributed file lock service node, to cause the distributed file lock service node to determine a cooperative service node, which first completes the contention control flow, to be the master cooperative service node, and obtain a contention result determined by the distributed file lock service node.

In another embodiment, the step of the master cooperative service node initiating a backup operation according to the backup rule may include the following step. The master cooperative service node generates a backup policy according to the backup rule and data backup conditions in storage nodes, writes the backup policy into the distributed file lock service node, and sends the backup policy to all the storage nodes to cause all the storage nodes to execute backup operations according to the backup policy.

In another embodiment, when the cooperative service node is determined to be a non-master cooperative service node, before the master cooperative service node sends the backup policy to all the storage nodes, or during all the storage nodes execute the backup operations according to the backup policy, the method may further include the following step. When the fault of the master cooperative service node is discovered, all cooperative service nodes re-initiate a contention control flow to the distributed file lock service node, to cause the distributed file lock service node to re-determine a cooperative service node, which first completes the contention control flow, to be the master cooperative service node, and obtain a contention result determined by the distributed file lock service node.

In another embodiment, a timer may be set in the master cooperative service node according to a backup period in the backup rule. A backup trigger condition being satisfied may include that: when the timer expires, it is determined that the backup trigger condition is satisfied. Accordingly, after the master cooperative service node is re-determined, the method may further include that: the re-determined master cooperative service node acquires a backup rule, and determinedetermineds whether current time satisfies a pre-set trigger condition according to a backup period in the backup rule, and obtains a determination result; when the determination result is that the current time satisfies the pre-set trigger condition, the master cooperative service node re-generates a backup policy according to the backup rule and data backup conditions in storage nodes, and sends the backup policy to all the storage nodes; and when the determination result is that the current time does not satisfy the pre-set trigger condition, a timer is reset according to the backup rule, and when the timer expires, a backup policy is re-generated according to the backup rule and data backup conditions in storage nodes and sent to all the storage nodes.

In another embodiment, when the master cooperative service node discovers the fault of a storage node, the method may further include the following step. The master cooperative service node re-generates a backup policy, and sends the re-generated backup policy to other storage nodes replacing the faulty storage node to cause the other storage nodes to execute backup operations according to the backup policy.

In another embodiment, the step of the master cooperative service node acquiring a backup rule may include the following steps. The master cooperative service node acquires a backup rule from the distributed file lock service node; or the master cooperative service node obtains a backup rule directly from a console operated by a user.

In another embodiment, the backup rule may include: a trigger period for each backup, a data set to be backed up, a backed-up target device, and backup attribute information.

In another embodiment, the data backup conditions may include: distribution conditions of data subsets of a data set in storage nodes, a data synchronization condition among at least one copy in a data subset, and backup records of all data sets.

In another embodiment, the method may further include that: the master cooperative service node acquires backup progresses of all the storage nodes according to a pre-set time interval, and writes the backup progresses into the distributed file lock service node.

The embodiment of the disclosure also provides a node, which may be a cooperative service node and may include: an acquisition unit and a trigger unit. The acquisition unit is arranged to acquire, when the cooperative service node is determined to be a master cooperative service node, a backup rule; and the trigger unit is arranged to initiate, when a backup trigger condition is satisfied, a backup operation according to the backup rule acquired by the acquisition unit. The node further includes a first contention processing unit, arranged to initiate a contention control flow to the distributed file lock service node, to cause the distributed file lock service node to determine a cooperative service node, which first completes the contention control flow, to be the master cooperative service node, and obtain a contention result determined by the distributed file lock service node.

In another embodiment, the trigger unit may be arranged to generate a backup policy according to the backup rule acquired by the acquisition unit and data backup conditions in storage nodes, write the backup policy into the distributed file lock service node, and send the backup policy to all the storage nodes to cause all the storage nodes to execute backup operations according to the backup policy.

In another embodiment, the first contention processing unit is further arranged to: when the cooperative service node is determined to be a non-master cooperative service node, before the master cooperative service node sends the backup policy to all the storage nodes, or during all the storage nodes execute the backup operations according to the backup policy, re-initiate, when the fault of the master cooperative service node is discovered, a contention control flow to the distributed file lock service node, to cause the distributed file lock service node to re-determine a cooperative service node, which first completes the contention control flow, to be the master cooperative service node; and obtain a contention result determined by the distributed file lock service node.

In another embodiment, the trigger unit may be arranged to set, when the cooperative service node is determined to be the master cooperative service node, a timer according to a backup period in the backup rule, and determine that the backup trigger condition is satisfied when the timer expires. The trigger unit may be further arranged to: acquire, after the cooperative service node is re-determined to be the master cooperative service node, a backup rule, determine whether current time satisfies a pre-set trigger condition according to a backup period in the backup rule, and obtain a determination result; when the determination result is that the current time satisfies the pre-set trigger condition, re-generate, by the master cooperative service node, a backup policy according to the backup rule and data backup conditions in storage nodes, and send the backup policy to all the storage nodes; and when the determination result is that the current time does not satisfy the pre-set trigger condition, reset a timer according to the backup rule, re-generate, when the timer expires, a backup policy according to the backup rule and data backup conditions in storage nodes, and send the backup policy to all the storage nodes.

In another embodiment, the trigger unit may be further arranged to, when the fault of a storage node is discovered, re-generate a backup policy, and send the re-generated backup policy to other storage nodes replacing the faulty storage node, to cause the other storage nodes to execute backup operations according to the backup policy.

In another embodiment, the acquisition unit may be arranged to acquire a backup rule from a distributed file lock service node, or obtain a backup rule directly from a console operated by a user.

In another embodiment, the node may further include a first receiving unit and a first sending unit. The first receiving unit is arranged to acquire backup progresses of all the storage nodes according to a pre-set time interval. The first sending unit is arranged to send the backup progresses obtained by the first receiving unit to the distributed file lock service node.

The embodiment of the disclosure also provides a data backup system, which may include a cooperative service node, a distributed file lock service node and storage nodes. The cooperative service node is arranged to: acquire a backup rule after being determined to be a master cooperative service node; when a backup trigger condition is satisfied, generate a backup policy according to the backup rule and data backup conditions in the storage nodes, write the backup policy into the distributed file lock service node, and send the backup policy to all the storage nodes. The distributed file lock service node is arranged to receive the backup policy sent by the cooperative service node and store the backup policy. The storage node is arranged to receive the backup policy sent by the cooperative service node, and execute a backup operation according to the backup policy.

According to the invention, the distributed file lock service node is arranged to receive a contention control flow sent by all the cooperative service nodes, determine a cooperative service node, which first completes the contention control flow, to be a master cooperative service node, and send a contention result to all the cooperative service nodes.

The embodiment of the disclosure also provides a computer storage medium. Computer-executable instructions may be stored in the computer storage medium. The computer-executable instructions may be arranged to perform the data backup method according to the embodiment of the disclosure, when they are executed on a computer.

According to the data backup method, the node and the computer storage medium provided in the embodiment of the disclosure, after a cooperative service node is determined to be a master cooperative service node, the master cooperative service node acquires a backup rule. When a backup trigger condition is satisfied, the master cooperative service node initiates a backup operation according to the backup rule. Thus, centralized control of a backup mechanism in a distributed storage system is implemented via the master cooperative service node, thereby overcoming the defect in the conventional art that centralized control of data backup cannot be implemented, and improving the data reliability of the distributed storage system and the usability of operation and maintenance of a production environment. Moreover, backup operations of all storage nodes are triggered via the master cooperative service node, so that all the storage nodes can perform data backup concurrently, and time for data backup is greatly shortened.

### BRIEF DESCRIPTION OF THE DRAWINGS

Fig. 1 is a flowchart of a data backup method according to an embodiment 1 of the disclosure;
Fig. 2 is a flowchart of a data backup method according to an embodiment 2 of the disclosure;
Fig. 3 is a flowchart of a fault processing method in a data backup process according to an embodiment 3 of the disclosure;
Fig. 4 is a composition structure diagram of a data backup system according to an embodiment of the disclosure; and
Fig. 5 is a composition structure diagram of a cooperative service node according to an embodiment of the disclosure.

### DETAILED DESCRIPTION

The disclosure will be further described in detail below in connection with the drawings and specific embodiments.

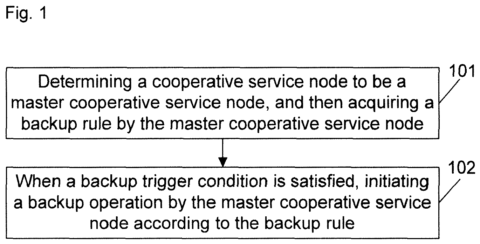

The embodiment of the disclosure provides a data backup method. The data backup method is applied in a master cooperative service node. Fig. 1 is a flowchart of a data backup method according to an embodiment 1 of the disclosure. As shown in Fig. 1, the method includes the following steps.

At step 101, a master cooperative service node acquires a backup rule after a cooperative service node is determined to be the master cooperative service node.

In the present embodiment, there are at least two cooperative service nodes, in order that the requirements for disaster tolerance after fault occurrence, capacity expansion and the like can be met.

Here, the step that a cooperative service node is determined to be a master cooperative service node includes that: all cooperative service nodes initiate a contention control flow to the distributed file lock service node, and a cooperative service node, which first completes the contention control flow, is determined to be the master cooperative service node.

Specifically, when all the cooperative service nodes initiate the contention control flow to the distributed file lock service node, all the cooperative service nodes create a file on the distributed file lock service node, only one of the cooperative service nodes completes the creation first, and the cooperative service node completing the creation first is determined to be the master cooperative service node.

The backup rule is a timing backup rule, and specifically includes: a trigger period for each backup, a data set to be backed up, a backed-up target device, and backup attribute information. The backup attribute information may be attribute information such as incremental backup or full backup. Specifically, the incremental backup refers to backup of all changed data after the previous backup, and the full backup refers to backup of all data.

In the present embodiment, the step of the master cooperative service node acquiring a backup rule includes the following steps. The master cooperative service node acquires a backup rule from the distributed file lock service node; or the master cooperative service node obtains a backup rule directly from a console operated by a user.

Specifically, the master cooperative service node may query whether a backup rule is stored on the distributed file lock service node. When it is determined that the distributed file lock service node stores a backup rule, the backup rule is acquired from the distributed file lock service node. When it is determined that the distributed file lock service node does not store a backup rule, a backup rule may be obtained directly from the console operated by the user.

Certainly, the master cooperative service node may also obtain the backup rule directly from the console operated by the user. After the master cooperative service node obtains the backup rule directly from the console operated by the user, the backup rule is written into the distributed file lock service node so as to replace the backup rule having been stored in the distributed file lock service node.

Specifically, the console is connected to any one of the at least two cooperative service nodes initially. After the master cooperative service node is determined, the console obtains an address of the master cooperative service node via the connected cooperative service node, and establishes a connection with the master cooperative service node according to the address of the master cooperative service node.

As an implementation mode, the console has a human-machine interaction interface. The user may set the backup rule on the console, and the console sends the backup rule to the master cooperative service node, wherein the console may initiate backup at any time.

At step 102, when a backup trigger condition is satisfied, the master cooperative service node initiates a backup operation according to the backup rule.

Here, the step of the master cooperative service node initiating a backup operation according to the backup rule includes the following step. The master cooperative service node generates a backup policy according to the backup rule and data backup conditions in storage nodes, writes the backup policy into a distributed file lock service node, and sends the backup policy to all the storage nodes, to cause all the storage nodes to execute backup operations according to the backup policy.

In the present embodiment, the backup trigger condition may be a trigger period for each backup set in the backup rule based on which a timer is set. When the timer expires, it is determined that the backup trigger condition is satisfied. The backup trigger condition may also be that: trigger is directly controlled from the console operated by the user. That is, the user directly triggers backup via the console, the control console issues a backup instruction to the master cooperative service node, and when the master cooperative service node receives the backup instruction, it is determined that the backup trigger condition is satisfied.

In the present embodiment, the data backup conditions include: distribution conditions of data subsets of a data set in storage nodes, a data synchronization condition among at least one copy of a data subset, and backup records of all data sets.

Specifically, the step of the master cooperative service node generating a backup policy according to the backup rule and data backup conditions in storage nodes specifically includes the following step.

The master cooperative service node sets a timer according to a trigger period for each backup. When the timer expires, the master cooperative service node sends the generated backup policy to the storage node to trigger the backup operation. The master cooperative service node determines whether an attribute to be backed up is full backup or incremental backup according to the backup attribute information, and further determines a data set to be backed up according to the data set to be backed up and the backup attribute information in the backup rule. The master cooperative service node determines a storage position of backup data according to the backup target device.

The master cooperative service node may also determine the backup policy according to the data backup conditions. For example, if it is set, in the backup policy, that only a complete copy is used for data backup and an incomplete copy does not participate in data backup, then the master cooperative service node identifies a complete copy in at least one copy of the same data subset, sets that data backup starts from a storage node where a specific copy is located, and sets a target device for data backup and a storage position on the target device.

In the present embodiment, there are at least two distributed file lock service nodes, in order that the requirements for disaster tolerance after fault occurrence, capacity expansion and the like can be met.

Here, the distributed file lock service nodes are mainly arranged to store backup policies and backup rules, configuration information or other management information. Moreover, the distributed file lock service nodes may determine which one of the at least two cooperative service nodes to serve as the master cooperative service node.

In the present embodiment, when the cooperative service node is determined to be a non-master cooperative service node, before the master cooperative service node sends the backup policy to all the storage nodes, or during all the storage nodes execute the backup operation according to the backup policy, the method further includes the following steps.

When the fault of the master cooperative service node is discovered, all cooperative service nodes re-initiate a contention control flow to the distributed file lock service node. A cooperative service node which first completes the contention control flow is re-determined to be the master cooperative service node.

The re-determined master cooperative service node acquires a backup rule, and generates a backup policy according to the backup rule and data backup conditions in storage nodes.

The re-determined master cooperative service node may acquire the backup policy from the distributed file lock service node, and resets a timer according to the backup policy. If the fault of the original master cooperative service node is recovered, the original master cooperative service node serves as a common cooperative service node.

On the basis of the above-mentioned embodiment, a timer is set in the master cooperative service node according to a backup period in the backup rule. Determining that a backup trigger condition is satisfied includes determing, when the timer expires, that the backup trigger condition is satisfied.

Correspondingly, after the master cooperative service node is re-determined, the method further includes that: the re-determined master cooperative service node acquires a backup rule, determines whether current time satisfies a preset trigger condition according to a backup period in the backup rule, and obtains a determination result.

When the determination result is that the current time satisfies the preset trigger condition, the master cooperative service node sends the backup policy to all the storage nodes immediately.

When the determination result is that the current time does not satisfy the preset trigger condition, a timer is reset according to the backup rule, and when the timer expires, the backup policy is sent to all the storage nodes.

Specifically, the current time is time at which the master cooperative service node is redetermined. The step of determining whether the current time satisfies the preset trigger condition includes that: a time threshold is preset, the time threshold is subtracted from the current time to obtain a time point t'; if one time point at which backup is should triggered is contained within a time period between the time point t' and the current time and a time point at which the previous backup is completed is not contained within the time period according to a backup record in the distributed file lock service node, it is determined that the current time satisfies the preset trigger condition. That is, the master cooperative service node sends the backup policy to all the storage nodes immediately. When the current time does not satisfy the above-mentioned condition, it is determined that the current time does not satisfy the preset trigger condition. Then the master cooperative service node sets a timer according to the preset trigger condition, and when the timer expires, the backup policy is sent to all the storage nodes.

In the present embodiment, when the master cooperative service node discovers the fault of a storage node, the method further includes the following step.

The master cooperative service node re-generates a backup policy, and sends the re-generated backup policy to other storage nodes replacing the faulty storage node, to cause the other storage nodes to execute backup operations according to the backup policy.

Specifically, in a backup process, the storage nodes may send backup progresses to the master cooperative service node at a first time interval. When the master cooperative service node does not receive the backup progress sent by any storage node within a second time interval, it may be determined that this storage node is faulty and the fault cannot be repaired. Then the master cooperative service node modifies the backup policy, arranges other storage nodes to replace the faulty storage node, and sends the backup progress previously sent by the storage node to the other storage nodes, such that the other storage nodes can back up data which is not backed up according to the backup progress.

In the present embodiment, the master cooperative service node acquires backup progresses of all the storage nodes with a preset time interval, and writes the backup progresses into the distributed file lock service node.

In the present embodiment, when the backup operations of all the storage nodes are completed, the master cooperative service node acquires backup success information of the storage nodes, and writes the backup success information into the distributed file lock service node.

The embodiment of the disclosure also provides a computer storage medium. Computer-executable instructions are stored in the computer storage medium. The computer-executable instructions are arranged to execute the data backup method according to the embodiment of the disclosure.

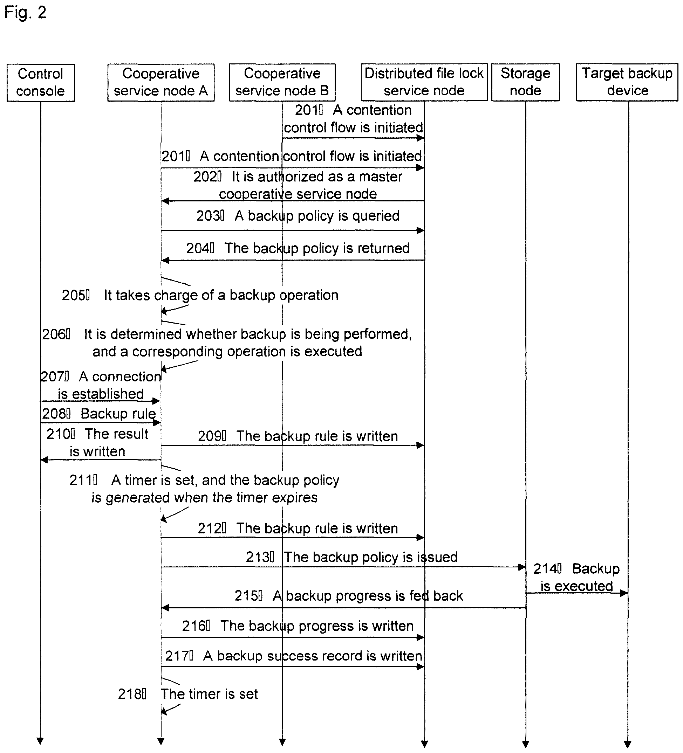

The embodiment of the disclosure also provides a data backup method. Fig. 2 is a flowchart of a data backup method according to an embodiment 2 of the disclosure. As shown in Fig. 2, the method includes the following steps.

At step 201, a cooperative service node A and a cooperative service node B initiate a contention control flow to a distributed file lock service node.

At step 202, the cooperative service node A succeeds in contention and becomes a master cooperative service node.

At step 203, the cooperative service node A queries, in the distributed file lock service node, whether a backup rule, a backup policy and a backup record exist.

At step 204, when the backup rule, the backup policy and the backup record exist in the distributed file lock service node, the distributed file lock service node sends the backup rule, the backup policy and the backup record to the cooperative service node A.

At step 205: the cooperative service node A determines whether a backup operation is being executed currently, and if so, the cooperative service node A takes charge of the control of the current backup operation.

At step 206, the cooperative service node A determines whether a backup operation is being executed currently, and if not, the cooperative service node A determines whether data backup in the present period is missed. If data backup in the present period is missed, the cooperative service node A initiates a backup operation immediately, otherwise, a timer is set for a subsequent backup operation according to the backup rule.

At step 207, a console is connected to the cooperative service node A.

At step 208, a user sets the backup rule on the console, and the console indicates the cooperative service node A.

At step 209, the cooperative service node A writes the backup rule into the distributed file lock service node.

At step 210, the cooperative service node A returns a write result about the backup rule to the console.

At step 211, the cooperative service node A sets a timer according to the backup rule, and when the timer expires, the backup operation is triggered to generate a backup policy.

At step 212, the cooperative service node A writes the backup policy into the distributed file lock service node.

At step 213, the cooperative service node A issues the backup policy to all storage nodes.

At step 214, all the storage nodes execute backup operations to a specified position of a target backup device according to the backup policy.

At step 215, all the storage nodes feed backup progresses back to the cooperative service node A in a backup process according to preset time.

At step 216, the cooperative service node A records the backup progresses in the distributed file lock service node.

At step 217, the cooperative service node A writes a backup success record to the distributed file lock service node after all the storage nodes complete backup.

At step 218, the cooperative service node A sets a timer for a subsequent backup operation.

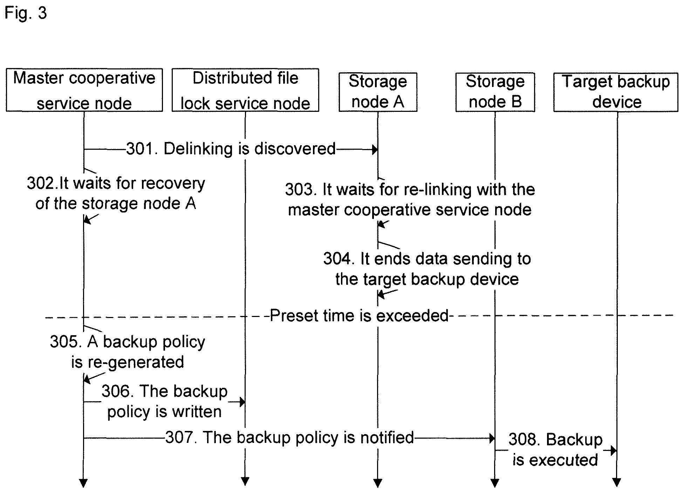

The embodiment of the disclosure also provides a fault processing method in a data backup process. Fig. 3 is a flowchart of a fault processing method in a data backup process according to an embodiment 3 of the disclosure. The present embodiment is based on the data backup method as shown in Fig. 2, and is applied to be executed after Step 214 and before Step 215. As shown in Fig. 3, the processing method includes the following steps.

At step 301, when a master cooperative service node discovers that it is disconneted from a storage node A, and the master cooperative service node determines that the reason may be a network fault or that the storage node A is faulty.

At step 302, the master cooperative service node waits for recovery of the storage node A.

At step 303, the storage node A waits for re-connection with the master cooperative service node.

At step 304, the storage node A temporarily terminals data sending to the target backup device.

At step 305, after pre-configured time, the master cooperative service node discovers that it is still unsuccessfully to linke with the storage node A, so the master cooperative service node abandons the storage node A, re-generates a backup policy, and transfers jobs of the storage node A to a storage node B for continuous operation.

At step 306, the master cooperative service node writes the re-generated backup policy into a distributed file lock service node.

At step 307, the master cooperative service node issues the re-generated backup policy to the storage node B.

At step 308, the storage node B replaces the storage node A, continues to execute a backup operation, and sends data to the target backup device.

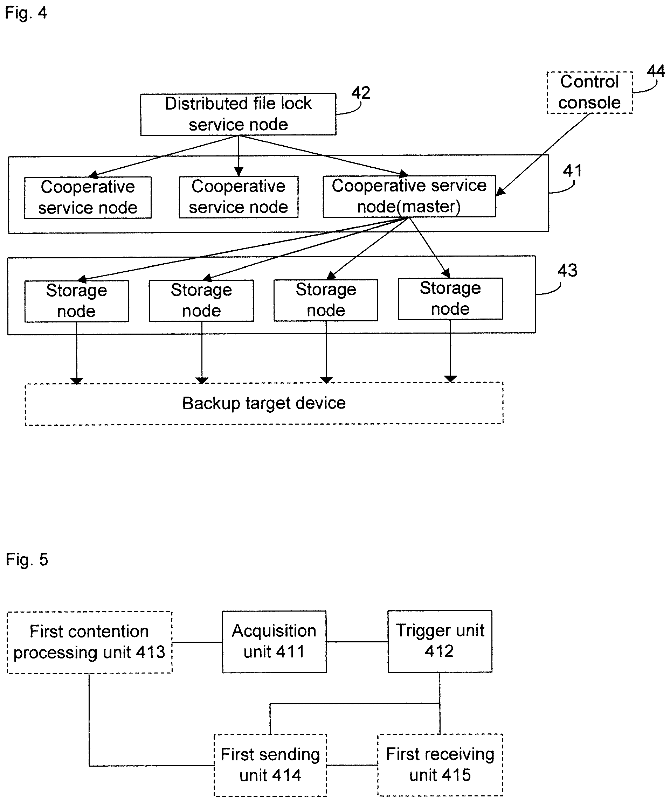

The embodiment of the disclosure also provides a data backup system. Fig. 4 is a composition structure diagram of a data backup system according to an embodiment of the disclosure. As shown in Fig. 4, the system includes: a cooperative service node 41, a distributed file lock service node 42 and storage nodes 43.

The cooperative service node 41 is arranged to acquire a backup rule after being determined to be a master cooperative service node; when a backup trigger condition is satisfied, generate a backup policy according to the backup rule and data backup conditions in the storage nodes, write the backup policy into the distributed file lock service node 42, and send the backup policy to all the storage nodes 43.

The distributed file lock service node 42 is arranged to receive the backup policy sent by the cooperative service node 41 and store the backup policy.

The storage node 43 is arranged to receive the backup policy sent by the cooperative service node 41, and execute a backup operation according to the backup policy.

In the present embodiment, there are at least two cooperative service nodes 41, at least two distributed file lock service nodes 42 and at least two storage nodes 43, in order that the requirements for disaster tolerance after fault occurrence, capacity expansion and the like can be met.

Specifically, a specific process that the cooperative service node 41 is determined to be the master cooperative service node includes that: all cooperative service nodes 41 initiate a contention control flow to the distributed file lock service node 42, to cause the distributed file lock service node 42 to determine a cooperative service node 41 completing the contention control flow first to be the master cooperative service node, and obtain a contention result determined by the distributed file lock service node 42.

The distributed file lock service node 42 is further arranged to receive a contention control flow sent by all the cooperative service nodes 41, determine a cooperative service node 41 completing the contention control flow first to be a master cooperative service node, and send a contention result to all the cooperative service nodes 41.

Specifically, when all the cooperative service nodes 41 initiate the contention control flow to the distributed file lock service node 42, all the cooperative service nodes 41 create a file on the distributed file lock service node 42. Only one of the cooperative service nodes complete creation first, and the cooperative service node completing creation first is determined to be the master cooperative service node.

Specifically, the cooperative service node 41 is arranged to acquire a backup rule from the distributed file lock service node 42; or, obtain a backup rule directly from a console 44 operated by a user.

The backup rule includes a trigger period of each backup, a data set to be backed up, a backed-up target device, and backup attribute information.

The data backup conditions include distribution conditions of data subsets in a data set in storage nodes, a data synchronization condition among at least one copy in a data subset, and backup records of all data sets.

In the present embodiment, the backup trigger condition may be that: a trigger period of each backup is set in the backup rule, a timer is set according to the trigger period, and when the timer expires, it is determined that the backup trigger condition is satisfied. The backup trigger condition may also be that: trigger is directly controlled from the console operated by the user, that is, the user directly triggers backup via the console, and the console issues a backup instruction to the master cooperative service node. When the master cooperative service node receives the backup instruction, it is determined that the backup trigger condition is satisfied.

The data backup conditions include distribution conditions of data subsets in a data set in storage nodes, a data synchronization condition of at least one copy in a data subset, and backup records of all data sets.

Specifically, the step that the master cooperative service node generates a backup policy according to the backup rule and data backup conditions in storage nodes specifically includes the following step.

The master cooperative service node sets a timer according to a trigger period of each backup, and when the timer expires, the master cooperative service node sends the generated backup policy to the storage node, so as to trigger the backup operation. The master cooperative service node determines whether an attribute to be backed up is full backup or incremental backup according to the backup attribute information, and further determines a data set to be backed up according to the data set to be backed up and the backup attribute information in the backup rule. The master cooperative service node determines a storage position of backup data according to the backup target device.

The master cooperative service node may also determine the backup policy according to the data backup conditions. For example, it is set, in the backup policy, that only a complete copy is used for data backup and an incomplete copy does not participate in data backup. Then the master cooperative service node identifies a complete copy in at least one copy of the same data subset, sets that data backup starts from a storage node where a specific copy is located, and sets a target device for data backup and a storage position on the target device.

In the present embodiment, when the distributed file lock service node 42 does not store a backup policy, the distributed file lock service node 42 receives and stores the backup policy sent by the cooperative service node 41 serving as the master cooperative service node. When the user modifies the backup policy via the console 64, the distributed file lock service node 42 receives the backup policy, and replaces the own stored backup policy.

According to another embodiment of the disclosure, the cooperative service node 41 is further arranged, when the cooperative service node is determined to be a non-master cooperative service node, before the master cooperative service node sends the backup policy to all the storage nodes, or in a process that all the storage nodes execute the backup operations according to the backup policy, to re-initiate, , when the fault of the master cooperative service node is discovered, a contention control flow to the distributed file lock service node, to cause the distributed file lock service node to re-determine a cooperative service node completing the contention control flow first to be the master cooperative service node, and obtain a contention result determined by the distributed file lock service node.

Further, the cooperative service node 41 is further arranged to: determine, after the master cooperative service node is re-determined, whether current time satisfies a preset trigger condition, and obtain a determination result. When the determination result is that the current time satisfies the preset trigger condition, a backup policy is re-generated according to the backup rule and data backup conditions in storage nodes, and the backup policy is sent to all the storage nodes 43. When the determination result is that the current time does not satisfy the preset trigger condition, a timer is set according to the backup rule. When the timer expires, a backup policy is re-generated according to the backup rule and data backup conditions in storage nodes, and is sent to all the storage nodes 43.

According to another embodiment of the disclosure, the cooperative service node 41 is further arranged to re-generate, when the fault of a storage node is discovered, a backup policy when being determined as the master cooperative service node, and send the re-generated backup policy to other storage nodes replacing the faulty storage node, to cause the other storage nodes to execute backup operations according to the backup policy.

According to another embodiment of the disclosure, the storage node 43 is further arranged to send backup progresses to the cooperative service node 41 serving as the master cooperative service node with a preset time interval in a backup operation process. The cooperative service node 41 serving as the master cooperative service node is further arranged to receive the backup progresses acquired by the storage node 43 according to the preset time interval, and write the backup progresses into the distributed file lock service node 42.

The embodiment of the disclosure also provides a node, which is a cooperative service node. Fig. 5 is a composition structure diagram of a cooperative service node according to an embodiment of the disclosure. As shown in Fig. 5, the cooperative service node includes an acquisition unit 411 and a trigger unit 412.

The acquisition unit 411 is arranged to acquire, when the cooperative service node is determined to be a master cooperative service node, a backup rule.

The trigger unit 412 is arranged to initiate, when a backup trigger condition is satisfied, a backup operation according to the backup rule acquired by the acquisition unit.

Specifically, the trigger unit 412 is arranged to generate a backup policy according to the backup rule acquired by the acquisition unit 411 and data backup conditions in storage nodes, write the backup policy into a distributed file lock service node, and send the backup policy to all the storage nodes, to cause all the storage nodes to execute backup operations according to the backup policy.

As an implementation mode, the node further includes a first contention processing unit 413 arranged to initiate a contention control flow to the distributed file lock service node, to cause the distributed file lock service node to determine a cooperative service node completing the contention control flow first to be the master cooperative service node, and obtain a contention result determined by the distributed file lock service node.

As another implementation mode, the node further includes a first contention processing unit 413 arranged to re-initiate, when the cooperative service node is determined to be a non-master cooperative service node, before the master cooperative service node sends the backup policy to all the storage nodes, or in a process that all the storage nodes execute the backup operations according to the backup policy, a contention control flow to the distributed file lock service node when the fault of the master cooperative service node is discovered, to cause the distributed file lock service node to re-determine a cooperative service node completing the contention control flow first to be the master cooperative service node, and obtain a contention result determined by the distributed file lock service node.

Specifically, the trigger unit 412 is arranged to set, when the cooperative service node is determined to be the master cooperative service node, a timer according to a backup period in the backup rule, and determine that the backup trigger condition is satisfied when the timer expires.

The trigger unit 412 is further arranged to acquire, after the cooperative service node is re-determined to be the master cooperative service node, a backup rule, and determine whether current time satisfies a preset trigger condition according to a backup period in the backup rule, and obtain a determination result. When the determination result is that the current time satisfies the preset trigger condition, the master cooperative service node re-generates a backup policy according to the backup rule and data backup conditions in storage nodes, and sends the backup policy to all the storage nodes. When the determination result is that the current time does not satisfy the preset trigger condition, a timer is reset according to the backup rule, and when the timer expires, a backup policy is re-generated according to the backup rule and data backup conditions in storage nodes, and sent to all the storage nodes.

As a further implementation mode, the trigger unit 412 is further arranged to re-generate, when the fault of a storage node is discovered, a backup policy, and send the re-generated backup policy to other storage nodes replacing the faulty storage node, to cause the other storage nodes to execute backup operations according to the backup policy.

Specifically, the acquisition unit 411 is arranged to acquire a backup rule from a distributed file lock service node, or directly obtain a backup rule from a console operated by a user.

The node further includes a first receiving unit 415 and a first sending unit 414. The first receiving unit 415 is arranged to acquire backup progresses of all the storage nodes with a preset time interval. The first sending unit 414 is arranged to send the backup progresses obtained by the first receiving unit 415 to the distributed file lock service node.

In the present embodiment, in practical application, both the acquisition unit 411 and the trigger unit 412 in the cooperative service node may be implemented by a Central Processing Unit (CPU), a Digital Signal Processor (DSP) or a Field-Programmable Gate Array (FPGA) in the cooperative service node. In practical application, the first sending unit 414 in the cooperative service node may be implemented by a transmitter or a transmitting antenna in the cooperative service node. In practical application, the first contention processing unit 413 in the cooperative service node may be implemented by a CPU, DSP or FPGA in the cooperative service node with a transceiver or a transceiver antenna. In practical application, the first receiving unit 415 in the cooperative service node may be implemented by a receiver or a receiving antenna in the cooperative service node.

Those skilled in the art shall understand that functions of all processing units in the cooperative service node of the embodiment of the disclosure may be understood with reference to relevant description of the foregoing data backup method. All processing units in the cooperative service node of the embodiment of the disclosure may be implemented by means of an analogue circuit achieving the functions in the embodiment of the disclosure, or may be implemented by running of software executing the functions in the embodiment of the disclosure on a smart terminal.

Those skilled in the art shall understand that the embodiment of the disclosure may be provided as a method, a system or a computer program product. Thus, forms of a hardware embodiment, a software embodiment or an embodiment integrating software and hardware may be adopted in the disclosure. Moreover, a form of the computer program product implemented on one or more computer available storage media (including, but are not limited to, a disk memory, an optical memory and the like) containing computer available program codes may be adopted in the disclosure.

The disclosure is described with reference to flow charts and/or block diagrams of the method, the device (system) and the computer program product according to the embodiment of the disclosure. It will be appreciated that each flow and/or block in the flow charts and/or the block diagrams and a combination of the flows and/or the blocks in the flow charts and/or the block diagrams may be implemented by computer program instructions. These computer program instructions may be provided for a general computer, a dedicated computer, an embedded processor or processors of other programmable data processing devices to generate a machine, such that an apparatus for implementing functions designated in one or more flows of the flow charts and/or one or more blocks of the block diagrams is generated via instructions executed by the computers or the processors of the other programmable data processing devices.

These computer program instructions may also be stored in a computer readable memory capable of guiding the computers or the other programmable data processing devices to work in a specific mode, such that a manufactured product including an instruction apparatus is generated via the instructions stored in the computer readable memory, and the instruction apparatus implements the functions designated in one or more flows of the flow charts and/or one or more blocks of the block diagrams.

These computer program instructions may also be loaded to the computers or the other programmable data processing devices, such that processing implemented by the computers is generated by executing a series of operation steps on the computers or the other programmable devices, and therefore the instructions executed on the computers or the other programmable devices provide a step of implementing the functions designated in one or more flows of the flow charts and/or one or more blocks of the block diagrams.

The above is only the preferred embodiment of the disclosure and not intended to limit the scope of protection of the disclosure.

### INDUSTRIAL APPLICABILITY

The embodiment of the disclosure implements centralized control of a backup mechanism in a distributed storage system via the master cooperative service node, thereby overcoming the defect in the conventional art that centralized control of data backup cannot be implemented, and improving the data reliability of the distributed storage system and the usability of operation and maintenance of a production environment; and moreover, backup operations of all storage nodes are triggered via the master cooperative service node, so all the storage nodes can perform data backup concurrently, and time for data backup is greatly shortened.

## Claims

1. A data backup method comprising:
acquiring (101), by a master cooperative service node, a backup rule after determining a cooperative service node to be the master cooperative service node; and
initiating (102), by the master cooperative service node, a backup operation according to the backup rule when determining that a backup trigger condition is satisfied,
wherein determining a cooperative service node to be the master cooperative service node comprises: initiating, by all cooperative service nodes, a contention control flow to a distributed file lock service node, to cause the distributed file lock service node to determine a cooperative service node, which first completes the contention control flow, to be the master cooperative service node, and obtaining a contention result determined by the distributed file lock service node.

2. The method according to claim 1, wherein the step of initiating, by the master cooperative service node, a backup operation according to the backup rule comprises:
generating, by the master cooperative service node, a backup policy according to the backup rule and data backup conditions in storage nodes, writing the backup policy into the distributed file lock service node, and sending the backup policy to all the storage nodes to cause all the storage nodes to execute the backup operation according to the backup policy.

3. The method according to claim 1, wherein when the cooperative service node is determined to be a non-master cooperative service node, before the master cooperative service node sends a backup policy to all storage nodes, or during all the storage nodes execute the backup operation according to the backup policy, the method further comprises:
re-initiating, by all cooperative service nodes, a contention control flow to the distributed file lock service node when a fault of the master cooperative service node is discovered, to cause the distributed file lock service node to re-determine a cooperative service node, which first completes the contention control flow first, to be the master cooperative service node, and obtaining a contention result determined by the distributed file lock service node.

4. The method according to claim 3, wherein a timer is set in the master cooperative service node according to a backup period in the backup rule, and the step of determining that a backup trigger condition is satisfied comprises:
determining that the backup trigger condition is satisfied when the timer expires; and
after the master cooperative service node is re-determined, the method further comprises:
acquiring, by the re-determined master cooperative service node, the backup rule, and judging whether current time satisfies a preset trigger condition according to a backup period in the backup rule and obtaining a determination result;
when the determination result is that the current time satisfies the preset trigger condition, re-generating, by the master cooperative service node, the backup policy according to the backup rule and data backup conditions in storage nodes, and sending the backup policy to all the storage nodes; and
when the determination result is that the current time does not satisfy the preset trigger condition, resetting the timer according to the backup rule, and when the timer expires, re-generating the backup policy according to the backup rule and data backup conditions in storage nodes, and sending the backup policy to all the storage nodes.

5. The method according to claim 1, wherein when the master cooperative service node discovers the fault of a storage node, the method further comprises:
re-generating, by the master cooperative service node, a backup policy, and sending the re-generated backup policy to other storage nodes replacing the faulty storage node to cause the other storage nodes to execute the backup operation according to the backup policy.

6. The method according to claim 1, wherein acquiring, by the master cooperative service node, a backup rule comprises:
acquiring, by the master cooperative service node, the backup rule from the distributed file lock service node; or
acquiring, by the master cooperative service node, the backup rule directly from a console operated by a user.

7. The method according to claim 1, wherein the backup rule comprises: a trigger period for each backup, a data set to be backed up, a backed-up target device, and backup attribute information.

8. The method according to claim 2, wherein the data backup conditions comprise: distribution conditions of data subsets of a data set in the storage nodes, a data synchronization condition among at least one copy of a data subset, and backup records of all data sets.

9. The method according to claim 1, further comprising: acquiring, by the master cooperative service node, backup progresses of all storage nodes with a preset time interval, and writing the backup progresses into the distributed file lock service node.

10. A node which is a cooperative service node comprising:
an acquisition unit (411) arranged to acquire, when the cooperative service node is determined to be a master cooperative service node, a backup rule;
a trigger unit (412) arranged to initiate, when a backup trigger condition is satisfied, a backup operation according to the backup rule acquired by the acquisition unit;
a first contention processing unit (413), arranged to initiate a contention control flow to a distributed file lock service node, to cause the distributed file lock service node to determine a cooperative service node, which first completes the contention control flow, to be the master cooperative service node, and obtain a contention result determined by the distributed file lock service node.

11. The node according to claim 10, wherein the trigger unit (412) is arranged to generate a backup policy according to the backup rule acquired by the acquisition unit (411) and data backup conditions in storage nodes, write the backup policy into the distributed file lock service node, and send the backup policy to all the storage nodes, to cause all the storage nodes to execute the backup operation according to the backup policy.

12. A data backup system comprising cooperative service nodes according to claim 10 and a distributed file lock service node arranged to receive a contention control flow sent by all cooperative service nodes, determine a cooperative service node, which first completes the contention control flow, to be a master cooperative service node, and send a contention result to all the cooperative service nodes.

13. The data backup system according to claim 12, further comprising storage nodes,
wherein in each cooperative service node the trigger unit (412) is arranged to generate a backup policy according to the backup rule acquired by the acquisition unit (411) and data backup conditions in the storage nodes, send the backup policy to the distributed file lock service node and to all the storage nodes,
wherein the distributed file lock service node is arranged to receive the backup policy sent by the cooperative service node and to store the backup policy; and
wherein the storage nodes are arranged to receive the backup policy sent by the cooperative service node and to execute a backup operation according to the backup policy.

14. A computer storage medium for storing computer-executable instructions which, when executed on a computer, performs the data backup method according to any one of claims 1-9.

## Patentansprüche

1. Datensicherungsverfahren, umfassend:
Erfassen (101), durch einen kooperativen Masterdienstknoten, einer Sicherungsregel nach dem Bestimmen eines kooperativen Dienstknotens als den kooperativen Masterdienstknoten; und
Initiieren (102), durch den kooperativen Masterdienstknoten, eines Sicherungsvorgangs gemäß der Sicherungsregel, wenn bestimmt wird, dass eine Sicherungsauslösebedingung erfüllt ist,
wobei das Bestimmen eines kooperativen Dienstknotens als den kooperativen Masterdienstknoten umfasst: Initiieren, durch alle kooperativen Dienstknoten, eines Zugangskonflikt-Steuerflusses zu einem verteilten Dateisperrdienstknoten, so dass bewirkt wird, dass der verteilte Dateisperrdienstknoten einen kooperativen Dienstknoten, der den Zugangskonflikt-Steuerfluss als erstes beendet, als den kooperativen Masterdienstknoten bestimmt, und Erhalten eines Zugangskonfliktergebnisses, das durch den verteilten Dateisperrdienstknoten bestimmt wird.

2. Verfahren nach Anspruch 1, bei dem der Schritt des Initiierens, durch den kooperativen Masterdienstknoten, eines Sicherungsvorgangs gemäß der Sicherungsregel umfasst:
Erzeugen, durch den kooperativen Masterdienstknoten, einer Sicherungsmethode gemäß der Sicherungsregel und Datensicherungsbedingungen in Speicherknoten, Schreiben der Sicherungsmethode in den verteilten Dateisperrdienstknoten und Senden der Sicherungsmethode zu allen Speicherknoten zum Bewirken, dass alle Speicherknoten den Sicherungsvorgang gemäß der Sicherungsmethode ausführen.

3. Verfahren nach Anspruch 1, bei dem, wenn bestimmt wird, dass der kooperative Dienstknoten kein kooperativer Masterdienstknoten ist, bevor der kooperative Masterdienstknoten eine Sicherungsmethode zu allen Speicherknoten sendet, oder während alle Speicherknoten den Sicherungsvorgang gemäß der Sicherungsmethode ausführen, das Verfahren ferner umfasst:
erneutes Initiieren, durch alle kooperativen Dienstknoten, eines Zugangskonflikt-Steuerflusses zu dem verteilten Dateisperrdienstknoten, wenn ein Fehler des kooperativen Masterdienstknotens entdeckt wird, so dass bewirkt wird, dass der verteilte Dateisperrdienstknoten einen kooperativen Dienstknoten erneut bestimmt, der den Zugangskonflikt-Steuerfluss zuerst beendet, so dass es sich um den kooperativen Masterdienstknoten handelt, und Erhalten eines Zugangskonfliktergebnisses, das durch den verteilten Dateisperrdienstknoten bestimmt wird.

4. Verfahren nach Anspruch 3, bei dem ein Zeitgeber in dem kooperativen Masterdienstknoten gemäß eines Sicherungszeitraums in der Sicherungsregel eingestellt wird, und der Schritt des Bestimmens, dass eine Sicherungsauslösebedingung erfüllt ist, umfasst: Bestimmen, dass die Sicherungsauslösebedingung erfüllt ist, wenn der Zeitgeber abläuft; und
nachdem der kooperative Masterdienstknoten erneut bestimmt worden ist, das Verfahren ferner umfasst:
Erfassen, durch den erneut bestimmten kooperativen Masterdienstknoten, der Sicherungsregel und Beurteilen, ob die gegenwärtige Zeit eine voreingestellte Auslösebedingung gemäß eines Sicherungszeitraums in der Sicherungsregel erfüllt, und Erhalten eines Bestimmungsergebnisses;
wenn das Bestimmungsergebnis ist, dass die gegenwärtige Zeit die voreingestellte Auslösebedingung erfüllt, erneut Erzeugen, durch den kooperativen Masterdienstknoten, der Sicherungsmethode gemäß der Sicherungsregel und von Datensicherungsbedingungen in Speicherknoten, und Senden der Sicherungsmethode zu allen Speicherknoten; und
wenn das Bestimmungsergebnis ist, dass die gegenwärtige Zeit die voreingestellte Auslösebedingung nicht erfüllt, erneut Einstellen des Zeitgebers gemäß der Sicherungsregel, und wenn der Zeitgeber abläuft, erneut Erzeugen der Sicherungsmethode gemäß der Sicherungsregel und von Datensicherungsbedingungen in Speicherknoten, und Senden der Sicherungsmethode zu allen Speicherknoten.

5. Verfahren nach Anspruch 1, bei dem der kooperative Masterdienstknoten den Fehler eines Speicherknotens entdeckt, wobei das Verfahren ferner umfasst:
erneut Erzeugen, durch den kooperativen Masterdienstknoten, einer Sicherungsmethode, und Senden der erneut erzeugten Sicherungsmethode zu anderen Speicherknoten, die den fehlerhaften Speicherknoten ersetzen, so dass die anderen Speicherknoten den Sicherungsvorgang gemäß der Sicherungsmethode ausführen.

6. Verfahren nach Anspruch 1, bei dem das Erfassen, durch den kooperativen Masterdienstknoten, einer Sicherungsregel umfasst:
Erfassen, durch den kooperativen Masterdienstknoten, der Sicherungsregel von dem verteilten Dateisperrdienstknoten; oder
Erfassen, durch den kooperativen Masterdienstknoten, der Sicherungsregel direkt von einer Konsole, die durch einen Nutzer betrieben wird.

7. Verfahren nach Anspruch 1, bei dem die Sicherungsregel umfasst: einen Auslösezeitraum für jede Sicherung, einen zu sichernden Datensatz, eine gesicherte Zielvorrichtung und Sicherungseigenschaftsinformationen.

8. Verfahren nach Anspruch 2, bei dem die Datensicherungsbedingungen umfassen: Verteilungsbedingungen von Datenteilsätzen eines Datensatzes in den Speicherknoten, eine Datensynchronisationsbedingung zwischen der mindestens einen Kopie eines Datenteilsatzes und Sicherungsaufzeichnungen aller Datensätze.

9. Verfahren nach Anspruch 1, ferner umfassend: Erfassen, durch den kooperativen Masterdienstknoten, von Sicherungsfortschritten aller Speicherknoten mit einem voreingestellten Zeitintervall, und Schreiben der Sicherungsfortschritte in den verteilten Dateisperrdienstknoten.

10. Knoten, der ein kooperativer Dienstknoten ist, umfassend:
eine Erfassungseinheit (411), die zum Erfassen, wenn bestimmt wird, dass der kooperative Dienstknoten ein kooperativer Masterdienstknoten ist, einer Sicherungsregel ausgebildet ist;
eine Auslöseeinheit (412), die zum Initiieren, wenn eine Sicherungsauslösebedingung erfüllt ist, eines Sichervorgangs gemäß der Sicherungsregel, die durch die Erfassungseinheit erfasst worden ist, ausgebildet ist;
eine erste Zugangskonflikt-Verarbeitungseinheit (413), die zum Initiieren eines Zugangskonflikt-Steuerflusses zu einem verteilten Dateisperrdienstknoten, so dass bewirkt wird, dass der verteilte Dateisperrdienstknoten einen kooperativen Dienstknoten, der den Zugangskonflikt-Steuerfluss als erstes beendet, als den kooperativen Masterdienstknoten bestimmt, und Erhalten eines Zugangskonfliktergebnisses, das durch den verteilten Dateisperrdienstknoten bestimmt wird, ausgebildet ist.

11. Knoten nach Anspruch 10, bei dem die Auslöseeinheit (412) zum Erzeugen einer Sicherungsmethode gemäß der Sicherungsregel, die durch die Erfassungseinheit (411) erfasst worden ist, und Datensicherungsbedingungen in Speicherknoten, Schreiben der Sicherungsmethode in den verteilten Dateisperrdienstknoten und Senden der Sicherungsmethode zu allen Speicherknoten zum Bewirken, dass alle Speicherknoten den Sicherungsvorgang gemäß der Sicherungsmethode ausführen, ausgebildet ist.

12. Datensicherungssystem, das den kooperativen Dienstknoten nach Anspruch 10 und einen verteilten Dateisperrdienstknoten umfasst, der zum Empfangen eines Zugangskonflikt-Steuerflusses, der durch alle kooperativen Dienstknoten gesendet wird, Bestimmen eines kooperativen Dienstknotens, der den Zugangskonflikt-Steuerfluss als erstes beendet, als einen kooperativen Masterdienstknoten, und Senden eines Zugangskonfliktergebnisses zu allen kooperativen Dienstknoten ausgebildet ist.

13. Datensicherungssystem nach Anspruch 12, das ferner Speicherknoten umfasst,
wobei in jedem kooperativen Dienstknoten die Auslöseeinheit (412) zum Erzeugen einer Sicherungsmethode gemäß der Sicherungsregel, die durch die Erfassungseinheit (411) erfasst worden ist, und Datensicherungsbedingungen in den Speicherknoten, Senden der Sicherungsmethode zu dem verteilten Dateisperrdienstknoten und zu allen Speicherknoten ausgebildet ist;
wobei der verteilte Dateisperrdienstknoten zum Empfangen der Sicherungsmethode, die durch den kooperativen Dienstknoten gesendet worden ist, und Speichern der Sicherungsmethode ausgebildet ist; und
wobei die Speicherknoten zum Empfangen der Sicherungsmethode, die durch den kooperativen Dienstknoten gesendet worden ist, und Ausführen eines Sicherungsvorgangs gemäß der Sicherungsmethode ausgebildet ist.

14. Computerspeichermedium zum Speichern von computerausführbaren Anweisungen, die, wenn sie auf einem Computer ausgeführt werden, das Datensicherungsverfahren nach einem der Ansprüche 1 bis 9 durchführen.

## Revendications

1. Procédé de sauvegarde de données comprenant :
l'acquisition (101), par un noeud de service coopératif maître, d'une règle de sauvegarde après la détermination qu'un noeud de service coopératif est le noeud de service coopératif maître ; et
le lancement (102), par le noeud de service coopératif maître, d'une opération de sauvegarde selon la règle de sauvegarde lorsqu'il est déterminé qu'une condition de déclenchement de sauvegarde est satisfaite,
dans lequel la détermination qu'un noeud de service coopératif est le noeud de service coopératif maître comprend : le lancement, par tous les noeuds de service coopératifs, d'un flux de commande de conflit à un noeud de service de verrouillage de fichier distribué, pour amener le noeud de service de verrouillage de fichier distribué à déterminer un noeud de service coopératif, qui complète d'abord le flux de commande de conflit, comme étant le noeud de service coopératif maître, et l'obtention d'un résultat de conflit déterminé par le noeud de service de verrouillage de fichier distribué.

2. Procédé selon la revendication 1, dans lequel l'étape de lancement, par le noeud de service coopératif maître, d'une opération de sauvegarde selon la règle de sauvegarde comprend :
la génération, par le noeud de service coopératif maître, d'une politique de sauvegarde selon la règle de sauvegarde et des conditions de sauvegarde de données dans des noeuds de stockage, l'écriture de la politique de sauvegarde dans le noeud de service de verrouillage de fichier distribué, et l'envoi de la politique de sauvegarde à tous les noeuds de stockage pour amener tous les noeuds de stockage à exécuter l'opération de sauvegarde selon la politique de sauvegarde.

3. Procédé selon la revendication 1, dans lequel, lorsque le noeud de service coopératif est déterminé comme étant un noeud de service coopératif non-maître, avant que le noeud de service coopératif maître envoie une politique de sauvegarde à tous les noeuds de stockage, ou pendant que tous les noeuds de stockage exécutent l'opération de sauvegarde selon la politique de sauvegarde, le procédé comprend en outre :
le lancement à nouveau, par tous les noeuds de service coopératifs, d'un flux de commande de conflit au noeud de service de verrouillage de fichier distribué lorsqu'un défaut du noeud de service coopératif maître est découvert, pour amener le noeud de service de verrouillage de fichier distribué à déterminer à nouveau un noeud de service coopératif, qui complète d'abord le flux de commande de conflit, comme étant le noeud de service coopératif maître, et l'obtention d'un résultat de conflit déterminé par le noeud de service de verrouillage de fichier distribué.

4. Procédé selon la revendication 3, dans lequel un minuteur est réglé dans le noeud de service coopératif maître selon une période de sauvegarde dans la règle de sauvegarde, et l'étape de détermination qu'une condition de déclenchement de sauvegarde est satisfaite comprend : la détermination que la condition de déclenchement de sauvegarde est satisfaite lorsque le minuteur expire ; et
après que le noeud de service coopératif maître est déterminé à nouveau, le procédé comprend en outre :
l'acquisition, par le noeud de service coopératif maître déterminé à nouveau, de la règle de sauvegarde, et le fait d'estimer si un temps actuel satisfait une condition de déclenchement préétablie selon une période de sauvegarde dans la règle de sauvegarde et l'obtention d'un résultat de détermination ;
lorsque le résultat de détermination est que le temps actuel satisfait la condition de déclenchement préétablie, la génération à nouveau, par le noeud de service coopératif maître, de la politique de sauvegarde selon la règle de sauvegarde et des conditions de sauvegarde de données dans des noeuds de stockage, et l'envoi de la politique de sauvegarde à tous les noeuds de stockage ; et
lorsque le résultat de détermination est que le temps actuel ne satisfait pas la condition de déclenchement préétablie, la réinitialisation du minuteur selon la règle de sauvegarde, et lorsque le minuteur expire, la génération à nouveau de la politique de sauvegarde selon la règle de sauvegarde et des conditions de sauvegarde de données dans des noeuds de stockage, et l'envoi de la politique de sauvegarde à tous les noeuds de stockage.

5. Procédé selon la revendication 1, dans lequel, lorsque le noeud de service coopératif maître découvre le défaut d'un noeud de stockage, le procédé comprend en outre :
la génération à nouveau, par le noeud de service coopératif maître, d'une politique de sauvegarde, et l'envoi de la politique de sauvegarde générée à nouveau à d'autres noeuds de stockage remplaçant le noeud de stockage défectueux pour amener les autres noeuds de stockage à exécuter l'opération de sauvegarde selon la politique de sauvegarde.

6. Procédé selon la revendication 1, dans lequel l'acquisition, par le noeud de service coopératif maître, d'une règle de sauvegarde comprend :
l'acquisition, par le noeud de service coopératif maître, de la règle de sauvegarde à partir du noeud de service de verrouillage de fichier distribué ; ou
l'acquisition, par le noeud de service coopératif maître, de la règle de sauvegarde directement à partir d'une console actionnée par un utilisateur.

7. Procédé selon la revendication 1, dans lequel la règle de sauvegarde comprend : une période de déclenchement pour chaque sauvegarde, un ensemble de données à sauvegarder, un dispositif cible sauvegardé, et des informations d'attribut de sauvegarde.

8. Procédé selon la revendication 2, dans lequel les conditions de sauvegarde de données comprennent : des conditions de distribution de sous-ensembles de données d'un ensemble de données dans les noeuds de stockage, une condition de synchronisation de données parmi au moins une copie d'un sous-ensemble de données, et des enregistrements de sauvegarde de tous les ensembles de données.

9. Procédé selon la revendication 1, comprenant en outre : l'acquisition, par le noeud de service coopératif maître, d'avancements de sauvegarde de tous les noeuds de stockage avec un intervalle de temps préétabli, et l'écriture des avancements de sauvegarde dans le noeud de service de verrouillage de fichier distribué.

10. Noeud qui est un noeud de service coopératif, comprenant :
une unité d'acquisition (411) conçue pour acquérir, lorsque le noeud de service coopératif est déterminé comme étant un noeud de service coopératif maître, une règle de sauvegarde ;
une unité de déclenchement (412) conçue pour lancer, lorsqu'une condition de déclenchement de sauvegarde est satisfaite, une opération de sauvegarde selon la règle de sauvegarde acquise par l'unité d'acquisition ;
une première unité de traitement de conflit (413), conçue pour lancer un flux de commande de conflit à un noeud de service de verrouillage de fichier distribué, pour amener le noeud de service de verrouillage de fichier distribué à déterminer un noeud de service coopératif, qui complète d'abord le flux de commande de conflit, comme étant le noeud de service coopératif maître, et obtenir un résultat de conflit déterminé par le noeud de service de verrouillage de fichier distribué.

11. Noeud selon la revendication 10, dans lequel l'unité de déclenchement (412) est conçue pour générer une politique de sauvegarde selon la règle de sauvegarde acquise par l'unité d'acquisition (411) et des conditions de sauvegarde de données dans des noeuds de stockage, écrire la politique de sauvegarde dans le noeud de service de verrouillage de fichier distribué, et envoyer la politique de sauvegarde à tous les noeuds de stockage, pour amener tous les noeuds de stockage à exécuter l'opération de sauvegarde selon la politique de sauvegarde.

12. Système de sauvegarde de données comprenant des noeuds de service coopératifs selon la revendication 10 et un noeud de service de verrouillage de fichier distribué conçu pour recevoir un flux de commande de conflit envoyé par tous les noeuds de service coopératifs, déterminer un noeud de service coopératif, qui achève d'abord le flux de commande de conflit, comme étant un noeud de service coopératif maître, et envoyer un résultat de conflit à tous les noeuds de service coopératifs.

13. Système de sauvegarde de données selon la revendication 12, comprenant en outre des noeuds de stockage,
dans lequel dans chaque noeud de service coopératif, l'unité de déclenchement (412) est conçue pour générer une politique de sauvegarde selon la règle de sauvegarde acquise par l'unité d'acquisition (411) et des conditions de sauvegarde de données dans les noeuds de stockage, envoyer la politique de sauvegarde au noeud de service de verrouillage de fichier distribué et à tous les noeuds de stockage,
dans lequel le noeud de service de verrouillage de fichier distribué est conçu pour recevoir la politique de sauvegarde envoyée par le noeud de service coopératif et pour stocker la politique de sauvegarde ; et
dans lequel les noeuds de stockage sont conçus pour recevoir la politique de sauvegarde envoyée par le noeud de service coopératif et pour exécuter une opération de sauvegarde selon la politique de sauvegarde.

14. Support de stockage sur ordinateur pour stocker des instructions exécutables par ordinateur qui, lorsqu'elles sont exécutées sur un ordinateur, réalisent le procédé de sauvegarde de données selon l'une quelconque des revendications 1 à 9.
